# EUROPÄISCHE PATENTANMELDUNG

(11) **EP 0 763 867 A1**
(43) Veröffentlichungstag der Anmeldung: **19.03.1997**
(21) Anmeldenummer: 96114484.7
(22) Anmeldetag: 10.09.1996
(51) Int. Cl.: H01P 3/08, H04L 25/02

(54) **Anordnung zum Übertragen von Signalen über Triplateleitungen**

(30) Priorität: 15.09.1995 DE 19534309
(71) Anmelder: SIEMENS AKTIENGESELLSCHAFT, 80333 München (DE)
(72) Erfinder: Aichholz, Eckart, Dipl.-Ing., 82515 Wolfratshausen (DE); Hilgers, Wolfgang, Dipl.-Ing., 86415 Mering (DE)

(57) **Zusammenfassung**

Anordnung zum Übertragen von binären Signalen (BS1 BIS BS4) über eine Triplate-Leitung (TL1) mit mehreren Signalleitungen (L1 bis L4) und gemeinsamen Außenleitern (RL1, RL2), bei der eine pseudosymmetrische Signalübertragung vorgesehen ist und die Außenleiter (RL1, RL2) durch einen sendeseitig angeordneten Abschlußwiderstand (RM) mit Masse (M) verbunden sind.

Hierdurch werden die Filtereigenschaften der durch Rückleiter und Masse gebildeten Stichleitung verringert und es können wesentlich höhere Datenraten übertragen werden.

## Beschreibung

Es ist bekannt, binäre Signale hoher Datenrate über symmetrische Leitungen zu übertragen, die von symmetrischen Ausgangsschaltungen angesteuert werden. Für jedes symmetrische Signal sind jedoch zwei Leitungen, zwei Ausgangsanschlüsse und zwei Eingangsanschlüsse auf den entsprechenden Baugruppen erforderlich.

Eine weitere Möglichkeit zur Übertragung von Signalen hoher Datenrate besteht in der Verwendung von sogenannten Triplate-Leitungen, bei denen jeweils mehrere Signalleiter zwischen gemeinsamen plattenförmig ausgebildeten Außenleitern geführt werden. Diese Leitungen sind aus 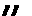 Integrierte Mikrowellenschaltungen", von Reinmut Hoffmann, Springer Verlag 1983, Seite 336 bis 340 bekannt. Triplate-Leitungen werden bei "Rückwandverdrahtungen" von Übertragungssystemen verwendet.

Bei höheren Datenraten weist eine solche Einrichtung jedoch filterähnliche Übertragungseigenschaften auf, die häufig nicht die erforderliche Datenrate zulassen.

Aufgabe der Erfindung ist es, eine Anordnung zur Übertragung höherer Datenraten anzugeben.

Diese Aufgabe wird durch die in Anspruch 1 angegebene Anordnung gelöst.

Vorteilhafte Weiterbildungen der Erfindung sind in den Unteransprüchen angegeben.

Die Resonanzeigenschaften der Triplate-Leitung werden durch einen Abschlußwiderstand zwischen der Triplate-Leitung und Masse verhindert.

Hierbei ist es meist ausreichend, wenn der Abschluß durch einen Widerstand im Bereich der Ausgangsschaltungen erfolgt.

Eine besonders einfache Lösung ergibt sich, wenn der Abschlußwiderstand als Teil eines Spannungsteilers ausgebildet wird, der zusammen mit einem Kondensator als Siebglied wirkt, über das die Ausgangsschaltungen an das Versorgungspotential angeschaltet sind. Werden dagegen Siebglied und Abschlußwiderstand getrennt ausgeführt, so bedeutet dies zwar einen etwas höheren Schaltungsaufwand, ermöglicht dagegen aber eine beliebige Ausbildung des Abschlußwiderstandes.

Eine besonders gute Stabilität bei Schwankungen der Temperatur und der Versorgungsspannung wird dadurch erreicht, daß eine Referenzspannung mit Hilfe einer weiteren gleich aufgebauten Ausgangsschaltung erzeugt wird.

Ausführungsbeispiele der Erfindung werden anhand von Figuren näher erläutert.

Es zeigen
- Figur 1: ein Ausführungsbeispiel der Erfindung und
- Figur 2: eine Variante der Erfindung.

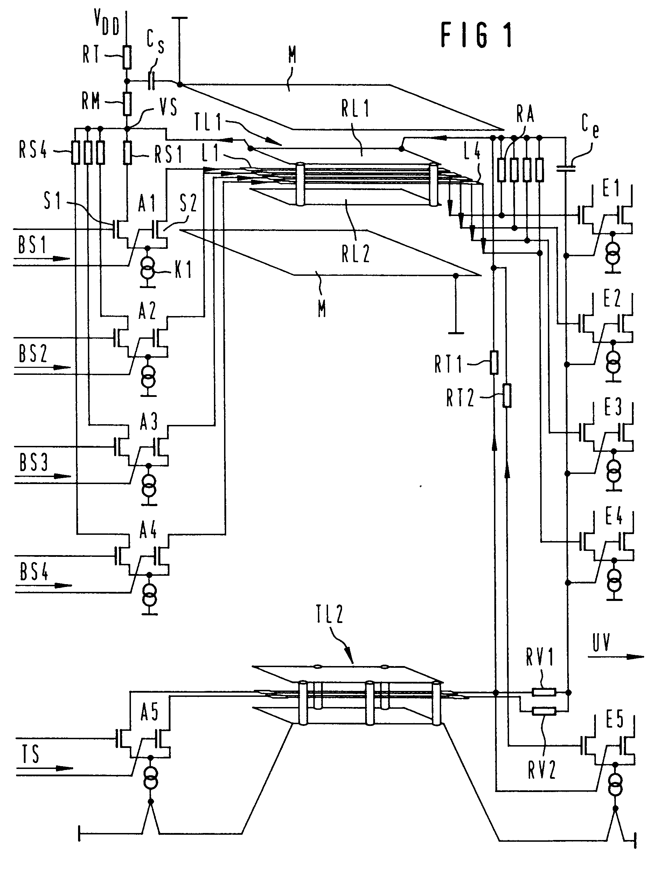

Anhand von Figur 1 soll die prinzipielle Funktionsweise einer pseudosymmetrischen Signalübertragung über eine Triplate-Leitung TL1 erläutert werden. Von einer Ausgangsstufe A1, realisiert als eine gegen Masse liegende Stromquelle K1 und elektronische Schalter S1, S2 wird ein Innenleiter L1 angesteuert. Dieser Signalleiter ist zwischen zwei flächenmäßig ausgebildeten Außenleitern RL1, RL2 geführt und auf der Empfangsseite mit einem Abschlußwiderstand RA abgeschlossen.

Eine als Differenzverstärker ausgebildete Empfangsstufe E1 wertet das übertragene Signal aus.
Die Vergleichsspannung für die Empfangsstufe kann beispielsweise durch einen Spannungsteiler gebildet werden.

In derselben Weise erfolgt die Übertragung weiterer Signale über weitere Signalleiter L2 bis L4 mit gleichen Anordnungen von Ausgangsstufen A2 bis A4 und Empfangsstufen E1 bis E4.

Jede Ausgangsschaltung A1 bis A4 weist zwei elektronische Schalter S1 und S2, beispielsweise MOS-Transistoren, auf, die symmetrisch von binären Signalen BS1 bis BS4 angesteuert werden. Da jeweils derselbe Strom entweder über eine Signalleitung L1 bis L4 oder über einen der Schutzwiderstände RS1 bis RS4 fließt, ändert sich der Strom an einem Versorgungspunkt VS nicht, an dem die Rückleitungen und die Schutzwiderstände RS1 bis RS4 zusammengeschaltet sind. Damit bleibt auch die Spannung konstant.

Auf der Empfangsseite summieren sich die Signalströme und fließen durch die leitend verbundenen Triplate-Außenleiter RL1, RL2 zurück. Die Leitungen sind hierbei nicht gegen Masse M potentialmäßig exakt festgelegt.

Die Triplate-Außenleiter RL1, RL2 und Masse M, die in Form zweier weiterer Flächen außen von den Triplate-Außenleitern angeordnet ist, bilden jedoch eine offene Stichleitung, die (abhängig von ihrer Länge) höhere Bitfolgefrequenzen unmöglich macht.

Wird die Stichleitung aber mit einem Masse-Abschlußwiderstand RM abgeschlossen, so werden die Resonanzeigenschaften stark verringert. Ein Siebkondensator Cₛ sorgt gleichzeitig für die galvanische Trennung zwischen den Triplate-Außenleitern und Masse. Der Verbindungspunkt zwischen den Masse-Abschlußwiderstand RM und dem Siebkondensator Cₛ ist über einen Teilerwiderstand RT an das Versorgungspotential V_{DD} angeschlossen.

Der einseitige Leitungsabschluß ist zur Erhöhung der Übertragungsbitrate von ca. 80 Mbit/s auf ca. 150 Mbit/s ausreichend. Darüber hinaus kann auch noch ein weiterer Abschluß des Rückleiter-Massesystems auf der Empfangsseite vorgesehen werden.

Der Abschluß der Triplate-Außenleiter/Masse-Leitung bewirkt außerdem eine Abschwächung von Störungen auf der Triplate-Außenleitung, da diese eine geringe Impedanz gegen Masse vorfinden.

Bei dem Ausführungsbeispiel erfolgt eine symmetrische Übertragung eines Taktsignals TS mit Hilfe einer weiteren Ausgangsschaltung A5 über eine zweite Triplate-Leitung TL2. Über empfangsseitige mit den Außenleitern RL1, RL2 verbundenen Abschlußwiderständen RAT1, RAT2 und Vorwiderstände RV1, RV2 wird eine gemeinsame Vergleichsspannung UV für die Empfangsstufen E1 bis E4 gebildet, die durch einen weiteren Kondensator Cₑ wechselspannungsmäßig mit den Außenleitern RL1 und RL2 verbunden ist. Da alle Ausgangsschaltungen A1 bis A5 gleich aufgebaut sind wird eine optimale Stabilität der Arbeitspunkte und damit eine gleichbleibende Übertragungskapazität erreicht. Der Kondensator Cₑ bewirkt, daß wechselspannungsmäßig das Potential der Außenleiter RL1, RL2 an den Differenzeingängen der Empfangsschaltngen anliegt und sich störende Wechselspannungen nicht auswirken können.

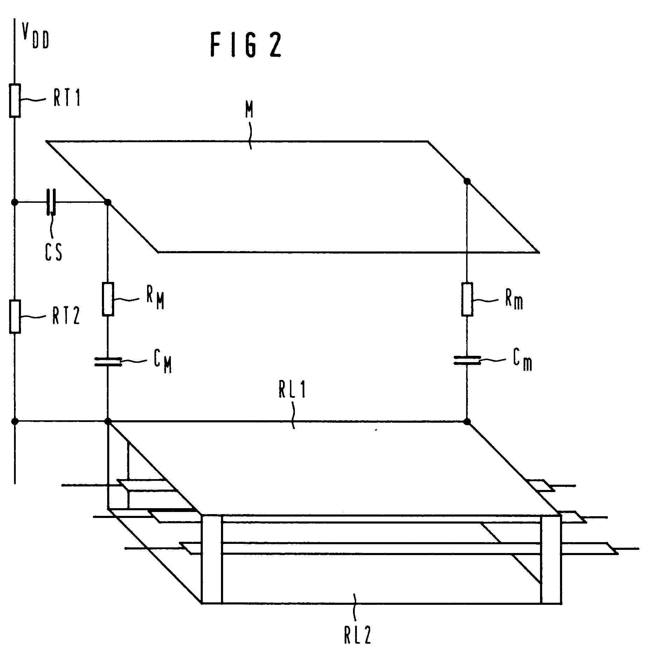

In Figur 2 ist eine Schaltungsvariante für den Masse/Tri-Plate-Außenleiter-Abschluß dargestellt. Es sind zwei in Serie geschaltete Teilerwiderstände RT1 und RT2 vorgesehen, deren Verbindungspunkt über den Siebkondensator Cₛ an Masse liegt. Der Abschlußwiderstand wird im wesentlichen durch die Serienschaltung des Masse-Abschlußwiderstandes R_{M} und eines Kondensators C_{M} gebildet. Bei dieser Variante können der Abschlußwiderstand und das Siebglied nahezu unabhängig voneinander dimensioniert werden. Figur 2 zeigt darüber hinaus die Möglichkeit des zusätzlichen Abschlußwiderstandes Rm, Cm auf der Empfangsseite.

## Patentansprüche

1. Anordnung zum Übertragen von binären Signalen über eine Triplate-Leitung (TL1) mit gemeinsamen Außenleitern (RL1, RL2) und mehreren zwischen diesen geführten Signalleitern (L1 bis L4),
mit Ausgangssstufen (A1 bis A4), die jeweils eine Stromquelle (K1) und zwei elektronische Schalter (S1, S2) aufweisen, wobei die Schalter (S1, S2) derart angesteuert werden, daß sie abwechselnd öffnen und schließen, so daß bei durchgeschaltetrem ersten Schalter (S1) über den Signalleiter (L1), einen auf deren Empfangsseite angeschlossenen Abschlußwiderstand (RA) und die Triplate-Rückleiter (RL1, RL2) oder bei durchgeschaltetem zweiten Schalter (S2) direkt oder über einen Schutzwiderstand (RS1) ein gleichgroßer Strom durch einen gemeinsamen Teilerwiderstand (RT) zu einem Versorgungspotential (V_{DD}) fließt,
und mit einem Masse-Abschlußwiderstand (RM), der sendeseitig zwischen den Triplate-Außenleitern (RL1, RL2) und Masse (M) geschaltet ist.

2. Schaltungsanordnung nach Anspruch 11,
**dadurch gekennzeichnet,**
daß der Masse-Abschlußwiderstand (RM, R_{M}) am sendeseitigen Ende der Triplate-Leitung (RL1) angeordnet ist.

3. Schaltungsanordnung nach Anspruch 2,
**dadurch gekennzeichnet,**
daß ein weiterer Masse-Abschlußwiderstand (Rm, Cm) am empfangsseitigen Ende der Triplate-Leitung (RL1) zwischen den Triplate-Außenleitern (RL1, RL2) und Masse (M) angeordnet ist.

4. Schaltungsanordnung nach Anspruch 2,
**dadurch gekennzeichnet,**
daß der Masse-Abschlußwiderstand (RM) zwischen dem Triplate-Außenleitern (RL1, RL2) und dem Teilerwiderstand (RT) eingeschaltet ist, wobei der Verbindungspunkt der Widerstände (RM, RT) über einen Siebkondensator (Cₛ) mit Masse (M) verbunden ist.

5. Schaltungsanordnung nach einem der vorhergehenden Ansprüche,
**dadurch gekennzeichnet,**
daß der Masse-Abschlußwiderstand (RM, Cₛ) als Serienschaltung eines ohmschen Widerstandes (RM) und eines Kondensators (Cₛ) ausgebildet ist.

6. Schaltungsanordnung nach einem der vorhergehenden Ansprüche,
**dadurch gekennzeichnet,**
daß als Differenzstufen ausgebildete Empfangsschaltungen (E1 bis E5) vorgesehen sind, deren erster Eingang mit einem Signalleiter (L1) verbunden ist und deren zweiter Eingang an eine Vergleichsspannung (UV) angeschaltet ist.

7. Schaltungsanordnung nach Anspruch 6,
**dadurch gekennzeichnet,**
daß die Vergleichsspannung (UV) über einen zwei als Spannungsteiler geschaltete Vorwiderstände (RV1, RV2) gebildet wird, der an eine symmetrische Taktleitung (TL2) angeschaltet ist und dessen Abgriff an Vergleichseingänge der Empfangsstufen (E1 bis E4)angeschaltet ist.

8. Schaltungsanordnung nach Anspruch 6 oder 7,
**dadurch gekennzeichnet,**
daß die Vergleichsspannung (UV) über einen Kondensator (Cₑ) mit den Außenleitern (RL1, RL2) der Triplateleitung (TL1) verbunden ist.

9. Schaltungsanordnung nach Anspruch 8,
**dadurch gekennzeichnet,**
daß die symmetrische Taktleitung (TL2) empfangsseitig über Abschlußwiderstände (RAT1, RAT2) mit den Außenleitern (RL1, RL2) der Triplateleitung (TL1) verbunden ist.
